# EUROPEAN PATENT APPLICATION

(11) **EP 4 685 950 A1**
(43) Date of publication of application: **28.01.2026**
(21) Application number: 25180666.7
(22) Date of filing: 04.06.2025
(51) Int. Cl.: H01M 50/209, H01M 50/233, H01M 50/249, H01M 50/296, H01M 50/317

(54) **POWER STORAGE DEVICE**

(30) Priority: 22.07.2024 JP 2024116894
(71) Applicant: TOYOTA JIDOSHA KABUSHIKI KAISHA, Toyota-shi, Aichi-ken 471-8571 (JP)
(72) Inventor: GOITSUKA, Shinya, Aichi-ken 471-8571 (JP)
(74) Representative: TBK

(57) **Abstract**

A power storage device (100) includes a power storage unit (110) and an accommodation case (90) that accommodates the power storage unit (110). The accommodation case (90) includes an upper case (91) and a lower case (92) disposed below the upper case (91). The lower case (92) includes a bottom wall (921) and a peripheral wall (922) standing elect from a peripheral portion of the bottom wall (921). The bottom wall (921) has a recess (50) recessed downward. The power storage unit (110) includes at least one terminal unit (619-624) disposed below a center of the power storage unit (110) in an upward/downward direction. The recess (50) is located below the at least one terminal unit (619-624).

## Description

### CROSS REFERENCE TO RELATED APPLICATIONS

This nonprovisional application is based on Japanese Patent Application No. 2024-116894 filed on July 22, 2024 with the Japan Patent OFFICE, the entire contents of which are hereby incorporated by reference.

### BACKGROUND

### Field

The present disclosure relates to a power storage device.

### Description of the Background Art

For example, Japanese Patent Laying-Open No. 2022-165717 discloses a battery pack (a power storage device) comprising a power storage module and a lower case having a flat bottom surface.

### SUMMARY

Generally, a power storage module is provided with a smoke exhaust unit to exhaust a gas present in the power storage module. The gas contains a conductive foreign matter (or debris). Therefore, when the gas is exhausted through the smoke exhaust unit, the conductive foreign matter may accumulate in the case and a short circuit may be formed between a terminal unit of the power storage module and the case. Furthermore, a short circuit may be formed between the terminal unit of the power storage module and the case due to condensed water produced as a power storage cell included in the power storage module is cooled.

It is an object of the present disclosure to suppress formation of a short circuit between a terminal unit of a power storage module and a case.
(1) In one aspect of the present disclosure, a power storage device comprises a power storage unit, and an accommodation case that accommodates the power storage unit. The accommodation case includes an upper case and a lower case disposed below the upper case. The lower case includes a bottom wall and a peripheral wall standing erect from a peripheral portion of the bottom wall. The bottom wall has a recess recessed downwards. The power storage unit includes at least one terminal unit disposed below a center of the power storage unit in an upward/downward direction. The recess is located below the at least one terminal unit.
(2) The power storage device according to item (1) above is mounted in a vehicle. The power storage device further comprises a case smoke exhaust valve provided at the accommodation case to exhaust gas present in the power storage device.
   The recess extends in a longitudinal direction of the vehicle. The power storage device has a space formed therein in communication with one end portion of the recess in the longitudinal direction of the vehicle and extending upward. The case smoke exhaust valve is provided at a portion of the accommodation case that defines the space.
(3) In the power storage device according to item (2) above, the power storage unit includes a power storage module. The power storage module includes an upper module, and a lower module disposed below the upper module. The upper module has an upper surface with a first smoke exhaust unit to exhaust gas present in the upper module. The lower module has a lower surface with a second smoke exhaust unit to exhaust gas present in the lower module. The case smoke exhaust valve is provided at a center of the accommodation case in the upward/downward direction or above the center of the accommodation case.
(4) In the power storage device according to item (2) above, the power storage unit includes a power storage module. The power storage module has a lower surface with a smoke exhaust unit to exhaust gas present in the power storage module. The case smoke exhaust valve is provided below a center of the accommodation case in the upward/downward direction.
(5) The power storage device according to item (1) above is mounted in a vehicle. The power storage device further comprises a sensor that senses water. The recess extends in a longitudinal direction of the vehicle. The sensor is provided at one end portion of the recess in the longitudinal direction of the vehicle.
(6) The vehicle according to item (5) above comprises an electrical device connected to the sensor. The electrical device is disposed above the power storage device on a side of the vehicle rearward of a center of the power storage device in the longitudinal direction of the vehicle. The one end portion is a rear end portion of the recess in the longitudinal direction of the vehicle.
(7) The power storage device according to item (1) above is mounted in a vehicle. The peripheral wall includes a first side wall and a second side wall spaced in a lateral direction of the vehicle. The power storage unit includes a first power storage module, and a second power storage module spaced from the first power storage module in the lateral direction of the vehicle. The at least one terminal unit includes a first terminal unit provided at the first power storage module, and a second terminal unit provided at the second power storage module. The power storage device further comprises a first reinforcement member provided at the lower case and projecting upward from the bottom wall, and a second reinforcement member provided at the lower case, projecting upward from the bottom wall, and spaced from the first reinforcement member in the lateral direction of the vehicle. The first reinforcement member and the second reinforcement member extend in a longitudinal direction of the vehicle. The first side wall, the first power storage module, the first reinforcement member, the second power storage module, the second reinforcement member, and the second side wall are disposed in this order in the lateral direction of the vehicle. The recess includes a first groove below the first terminal unit, and a second groove below the second terminal. The first groove extends in the longitudinal direction of the vehicle and includes a first bottom surface extending in the longitudinal direction of the vehicle. The second groove extends in the longitudinal direction of the vehicle and includes a second bottom surface extending in the longitudinal direction of the vehicle. A distance between the first power storage module and the first side wall is smaller than a distance between the first terminal unit and the first bottom surface. A distance between the first power storage module and the first reinforcement member is smaller than the distance between the first terminal unit and the first bottom surface. A distance between the second power storage module and the first reinforcement member is smaller than a distance between the second terminal unit and the second bottom surface. A distance between the second power storage module and the second reinforcement member is smaller than the distance between the second terminal unit and the second bottom surface.
(8) The power storage device according to item (1) above is mounted in a vehicle. The recess extends in a longitudinal direction of the vehicle. The recess includes a first region having a first depth and a second region having a second depth larger than the first depth. The second region is located on a side of the vehicle rearward of the first region.

The foregoing and other objects, features, aspects and advantages of the present disclosure will become apparent from the following detailed description of the present disclosure when taken in conjunction with the accompanying drawings.

### BRIEF DESCRIPTION OF THE DRAWINGS

Fig. 1 is a schematic side view of a vehicle comprising a power storage device according to an embodiment of the present disclosure.
Fig. 2 is a schematic exploded perspective view of a power storage device 100 shown in Fig. 1.
Fig. 3 shows a lower case 92 as viewed from above power storage device 100.
Fig. 4 schematically shows a power storage unit 110.
Fig. 5 shows an interior of power storage device 100, as viewed from above power storage device 100, with an upper case 91 removed therefrom.
Fig. 6 shows an interior of power storage device 100, as viewed from above power storage device 100, while coolers 31 to 33 and any components located above coolers 31 to 33 are removed.
Fig. 7 is a cross section taken along a line VII-VII indicated in Fig. 5.
Fig. 8 is a cross section taken along a line VIII-VIII indicated in Fig. 5.
Fig. 9 is a cross section of power storage device 100 and a device unit 120 taken along line VIII-VIII indicated in Fig. 5.
Fig. 10 is a cross section of a power storage device according to a fourth variation taken in the longitudinal direction of the vehicle.
Fig. 11 is a cross section of a power storage device according to a fifth variation taken in the longitudinal direction of the vehicle.
Fig. 12 is a cross section of a power storage device according to a sixth variation taken in the longitudinal direction of the vehicle.
Fig. 13 is a cross section of a power storage device according to a seventh variation taken in the longitudinal direction of the vehicle.
Fig. 14 is a side view of a power storage cell included in a power storage device according to an eighth variation.

### DESCRIPTION OF THE PREFERRED EMBODIMENTS

Hereinafter, embodiments and variations according to the present disclosure will be described with reference to the drawings. In the following description, identical parts and components are identically denoted. Their names and functions are also identical. Therefore, they will not be described repeatedly in detail. The embodiments and variations described below may selectively be combined as appropriate.

### [Embodiments]

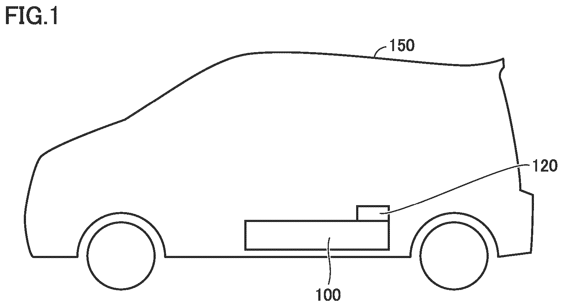

A power storage device according to an embodiment of the present disclosure will now be described with reference to Figs. 1 to 9.

Fig. 1 is a schematic side view of a vehicle comprising a power storage device according to an embodiment of the present disclosure. A power storage device 100 according to one embodiment of the present disclosure is a power storage device that stores power for traveling, and is mounted in a vehicle 150. Vehicle 150 travels using power stored in power storage device 100. Examples of vehicle 150 may include a hybrid electric vehicle, a plug-in hybrid electric vehicle, a fuel cell electric vehicle, and a battery electric vehicle. Power storage device 100 is disposed below a floor panel of vehicle 150.

Vehicle 150 includes a device unit 120. Device unit 120 for example includes an electronic control unit and a junction box.

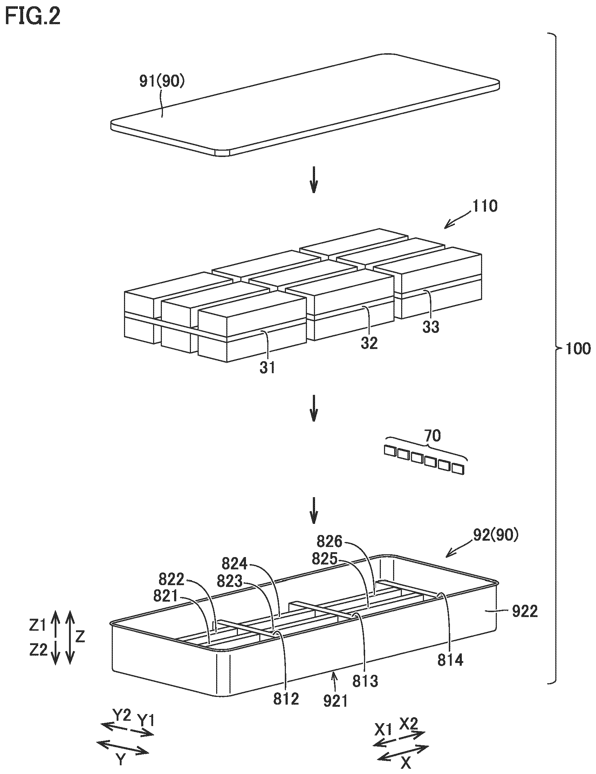

Fig. 2 is a schematic exploded perspective view of power storage device 100 shown in Fig. 1. In the present disclosure, a direction X, a direction Y, and a direction Z are orthogonal to one another. For example, the direction X is a longitudinal direction of vehicle 150 (see Fig. 1), and the direction Y is a lateral direction of vehicle 150. A direction X1 is a direction from a rear side of vehicle 150 toward a front side of vehicle 150. A direction X2 is a direction from the front side of vehicle 150 toward the rear side of vehicle 150. A direction Y1 is a direction from a right side of vehicle 150 toward a left side of vehicle 150. A direction Y2 is a direction from the left side of vehicle 150 toward the right side of vehicle 150. A direction Z is an upward/downward (or vertical) direction. A direction Z1 is a direction from a lower side of vehicle 150 toward an upper side of vehicle 150. A direction Z2 is a direction from the upper side of vehicle 150 toward the lower side of vehicle 150. In the present disclosure, the direction Z1 is also referred to as being above or an upper side, and the direction Z2 is also referred to as being below or a lower side.

Power storage device 100 according to the present embodiment is, for example, a battery pack. Power storage device 100 comprises an accommodation case 90, a sensor 70, a power storage unit 110, and coolers 31 to 33.

Accommodation case 90 accommodates sensor 70, power storage unit 110, and coolers 31 to 33. More specifically, accommodation case 90 includes an upper case 91 and a lower case 92. Lower case 92 is disposed below upper case 91. Sensor 70, power storage unit 110, and coolers 31 to 33 are accommodated in a space formed by upper case 91 and lower case 92. Power storage device 100 further comprises a reinforcement member. The reinforcement member is provided at lower case 92. Further, lower case 92 has a bottom wall 921 provided with a recess recessed downward.

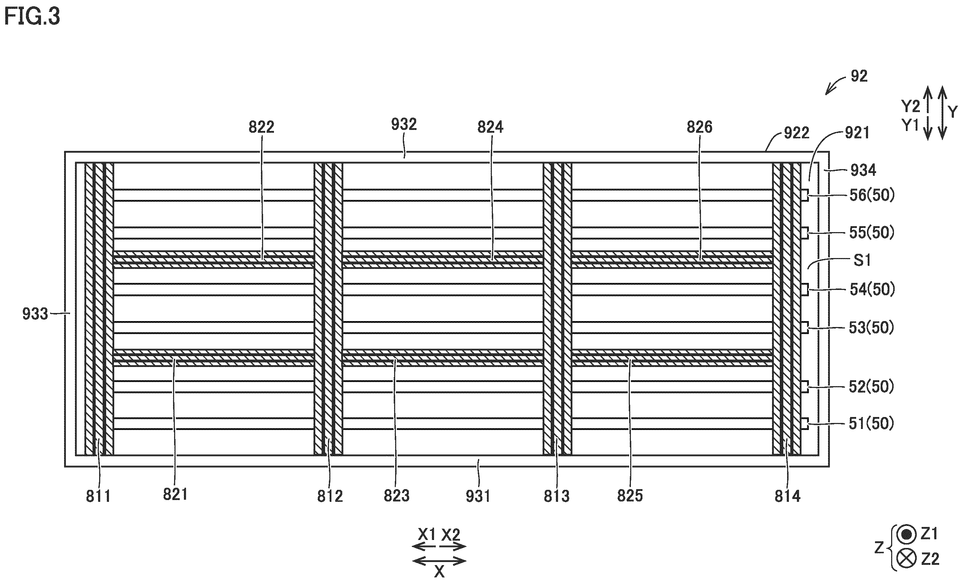

Lower case 92, the reinforcement member provided at lower case 92, and the recess formed in bottom wall 921 of lower case 92 will now be described with reference to Figs. 2 and 3. Fig. 3 shows lower case 92 as viewed from above power storage device 100. In Fig. 3, reinforcement members 811-814 and 821-826 are hatched in order to make the drawing easy to see.

Lower case 92 includes a bottom wall 921 and a peripheral wall 922. Peripheral wall 922 stands erect from a peripheral portion of bottom wall 921. Peripheral wall 922 is formed generally in a quadrangular prism. Peripheral wall 922 includes side walls 931 to 934. Side wall 931 and side wall 932 are spaced from each other in the direction Y. Side wall 933 and side wall 934 are spaced from each other in the direction X.

Power storage device 100 further comprises reinforcement members 811-814 and 821-826. Reinforcement members 811-814 and 821-826 are provided at lower case 92. Reinforcement members 811-814 and 821-826 each project upward from bottom wall 921 of lower case 92. Reinforcement members 811-814 and 821-826 are each secured (e.g., fastened) to bottom wall 921. Reinforcement members 811-814 and 821-826 are each a plate-shaped member of metal, for example.

Reinforcement members 811 to 814 are each formed to be elongate in the direction Y, and secured (for example, fastened) to bottom wall 921. Reinforcement members 811, 812, 813, 814 are disposed in this order in the direction X such that they are spaced from one another.

Reinforcement members 821 and 822 extend between reinforcement members 811 and 812 in the direction X. Reinforcement members 821 and 822 are spaced from each other in the direction Y.

Reinforcement members 823 and 824 extend between reinforcement members 812 and 813 in the direction X. Reinforcement members 823 and 824 are spaced from each other in the direction Y.

Reinforcement members 825 and 826 extend between reinforcement members 813 and 814 in the direction X. Reinforcement members 825 and 826 are spaced from each other in the direction Y.

Bottom wall 921 is provided with a recess 50 recessed downward. More specifically, recess 50 extends in the direction X. Recess 50 includes grooves 51 to 56. Grooves 51 to 56 each extend in the direction X. Grooves 51 to 56 are provided in this order in the direction Y such that the grooves are spaced from one another.

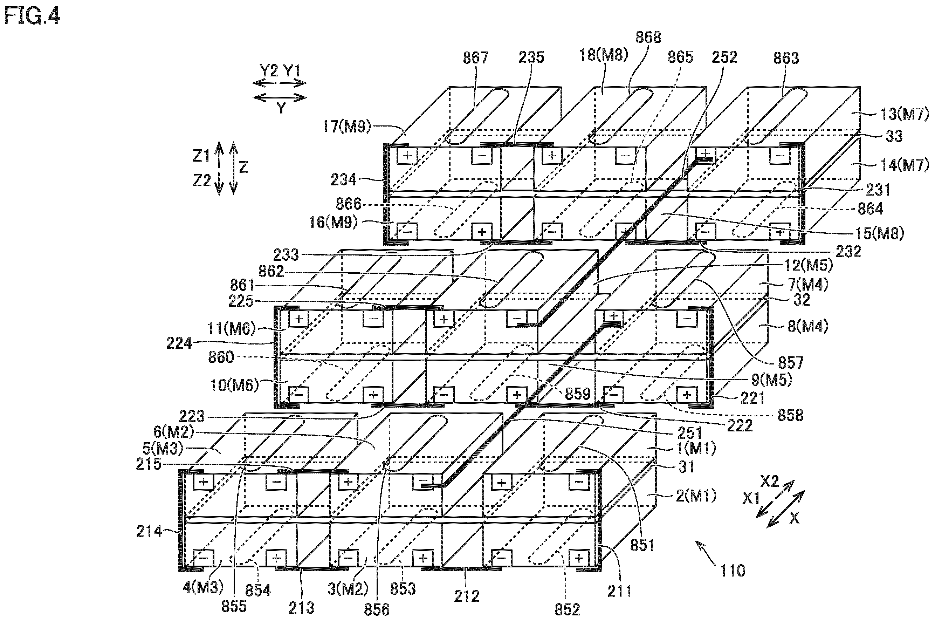

Power storage unit 110 shown in Fig. 2 will now be described with reference to Figs. 4 to 6. Fig. 4 schematically shows power storage unit 110.

Power storage unit 110 includes power storage modules M1 to M9. Power storage modules M1, M2, and M3 are disposed in this order in the direction Y. Power storage module M2 is spaced from power storage module M1 in the direction Y2. Power storage module M3 is spaced from power storage module M2 in the direction Y2.

Power storage modules M4, M5, and M6 are disposed in this order in the direction Y. Power storage module M5 is spaced from power storage module M4 in the direction Y2. Power storage module M6 is spaced from power storage module M5 in the direction Y2.

Power storage modules M7, M8, and M9 are disposed in this order in the direction Y. Power storage module M8 is spaced from power storage module M7 in the direction Y2. Power storage module M9 is spaced from power storage module M8 in the direction Y2.

Power storage modules M1, M4, and M7 are disposed in this order in the direction X. Power storage module M4 is spaced from power storage module M1 in the direction X2. Power storage module M7 is spaced from power storage module M4 in the direction X2.

Power storage modules M2, M5, and M8 are disposed in this order in the direction X. Power storage module M5 is spaced from power storage module M2 in the direction X2. Power storage module M8 is spaced from power storage module M5 in the direction X2.

Power storage modules M3, M6, and M9 are disposed in this order in the direction X. Power storage module M6 is spaced from power storage module M3 in the direction X2. Power storage module M9 is spaced from power storage module M6 in the direction X2.

Power storage modules M1 to M9 each include an upper module and a lower module disposed below the upper module.

More specifically, power storage module M1 includes an upper module 1 and a lower module 2 disposed below upper module 1. Power storage module M2 includes an upper module 6 and a lower module 3 disposed below upper module 6. Power storage module M3 includes an upper module 5 and a lower module 4 disposed below upper module 5. Power storage module M4 includes an upper module 7 and a lower module 8 disposed below upper module 7. Power storage module M5 includes an upper module 12 and a lower module 9 disposed below upper module 12. Power storage module M6 includes an upper module 11 and a lower module 10 disposed below upper module 11. Power storage module M7 includes an upper module 13 and a lower module 14 disposed below upper module 13. Power storage module M8 includes an upper module 18 and a lower module 15 disposed below upper module 18. Power storage module M9 includes an upper module 17 and a lower module 16 disposed below upper module 17.

Upper modules 1, 6, and 5 are disposed in this order in the direction Y. Lower modules 2, 3, and 4 are disposed in this order in the direction Y. Cooler 31 is disposed between upper modules 1, 5, and 6 and lower modules 2 to 4. That is, upper modules 1, 5, and 6 are disposed on a side above cooler 31, and lower modules 2 to 4 are disposed on a side below cooler 31. Cooler 31 is configured to cool power storage modules M1 to M3 (i.e., upper modules 1, 5, and 6 and lower modules 2 to 4).

Upper modules 7, 12, and 11 are disposed in this order in the direction Y. Lower modules 8, 9, and 10 are disposed in this order in the direction Y. Cooler 32 is disposed between upper modules 7, 11, and 12 and lower modules 8 to 10. That is, upper modules 7, 11, and 12 are disposed on a side above cooler 32, and lower modules 8 to 10 are disposed on a side below cooler 32. Cooler 32 is configured to cool power storage modules M4 to M6 (i.e., upper modules 7, 11, and 12 and lower modules 8 to 10).

Upper modules 13, 18, and 17 are disposed in this order in the direction Y. Lower modules 14, 15, and 16 are disposed in this order in the direction Y. Cooler 33 is disposed between upper modules 13, 17, and 18 and lower modules 14 to 16. That is, upper modules 13, 17, and 18 are disposed on a side above cooler 33, and lower modules 14 to 16 are disposed on a side below cooler 33. Cooler 33 is configured to cool power storage modules M7 to M9 (i.e., upper modules 13, 17, and 18 and lower modules 14 to 16).

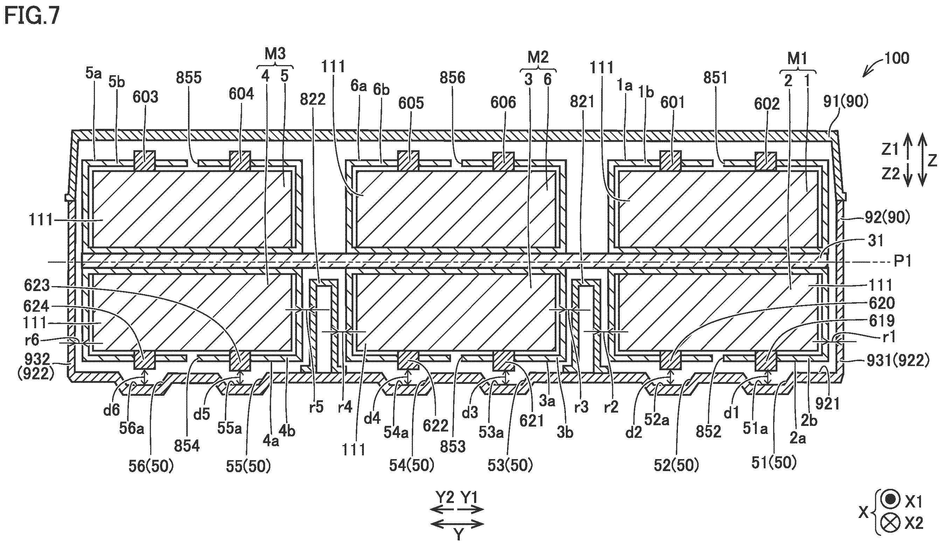

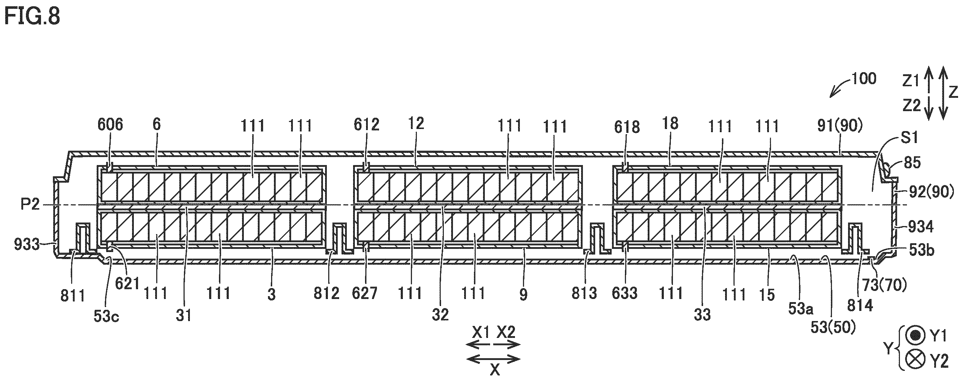

Upper modules 1, 5-7, 11-13, 17 and 18 and lower modules 2 to 4, 8 to 10, and 14 to 16 each include a plurality of power storage cells 111 (see Figs. 7 and 8) and a cell case that accommodates the plurality of power storage cells 111 (for example, cell cases 1a, 2a, 3a, 4a, 5a and 6a shown in Fig. 7). Each power storage cell 111 is in the form of a rectangular parallelepiped elongate in the direction Y. Each power storage cell 111 includes a cell body and a cell can that accommodates the cell body. The plurality of power storage cells 111 are aligned in the direction X in each of upper modules 1, 5-7, 11-13, 17 and 18 and lower modules 2 to 4, 8 to 10, and 14 to 16.

Each power storage cell 111 may be in the form of a rectangular parallelepiped elongate in the direction X. In that case, the plurality of power storage cells 111 are aligned in the direction Y in each of upper modules 1, 5-7, 11-13, 17 and 18 and lower modules 2 to 4, 8 to 10, and 14 to 16.

Each upper module has an upper surface with a first smoke exhaust unit to exhaust gas present in the upper module. In the present embodiment, the first smoke exhaust unit is a smoke exhaust port. More specifically, upper module 1 has an upper surface with a first smoke exhaust unit 851 to exhaust gas present in upper module 1. Upper module 5 has an upper surface with a first smoke exhaust unit 855 to exhaust gas present in upper module 5. Upper module 6 has an upper surface with a first smoke exhaust unit 856 to exhaust gas present in upper module 6. Upper module 7 has an upper surface with a first smoke exhaust unit 857 to exhaust gas present in upper module 7. Upper module 11 has an upper surface with a first smoke exhaust unit 861 to exhaust gas present in upper module 11. Upper module 12 has an upper surface with a first smoke exhaust unit 862 to exhaust gas present in upper module 12. Upper module 13 has an upper surface with a first smoke exhaust unit 863 to exhaust gas present in upper module 13. Upper module 17 has an upper surface with a first smoke exhaust unit 867 to exhaust gas present in upper module 17. Upper module 18 has an upper surface with a first smoke exhaust unit 868 to exhaust gas present in upper module 18.

Each lower module has a lower surface with a second smoke exhaust unit to exhaust gas present in the lower module. In the present embodiment, the second smoke exhaust unit is a smoke exhaust port. More specifically, lower module 2 has a lower surface with a second smoke exhaust unit 852 to exhaust gas present in lower module 2. Lower module 3 has a lower surface with a second smoke exhaust unit 853 to exhaust gas present in lower module 3. Lower module 4 has a lower surface with a second smoke exhaust unit 854 to exhaust gas present in lower module 4. Lower module 8 has a lower surface with a second smoke exhaust unit 858 to exhaust gas present in lower module 8. Lower module 9 has a lower surface with a second smoke exhaust unit 859 to exhaust gas present in lower module 9. Lower module 10 has a lower surface with a second smoke exhaust unit 860 to exhaust gas present in lower module 10. Lower module 14 has a lower surface with a second smoke exhaust unit 864 to exhaust gas present in lower module 14. Lower module 15 has a lower surface with a second smoke exhaust unit 865 to exhaust gas present in lower module 15. Lower module 16 has a lower surface with a second smoke exhaust unit 866 to exhaust gas present in lower module 16.

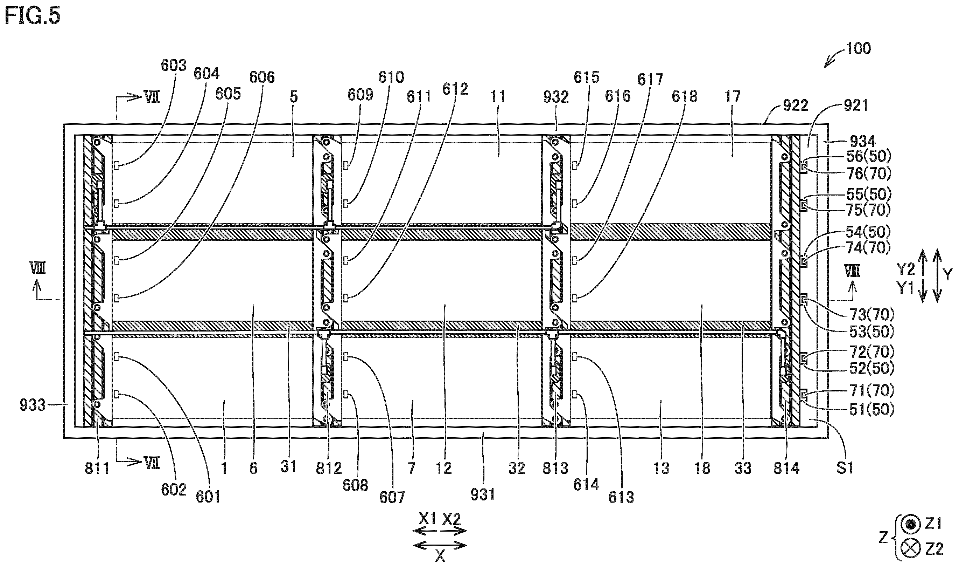

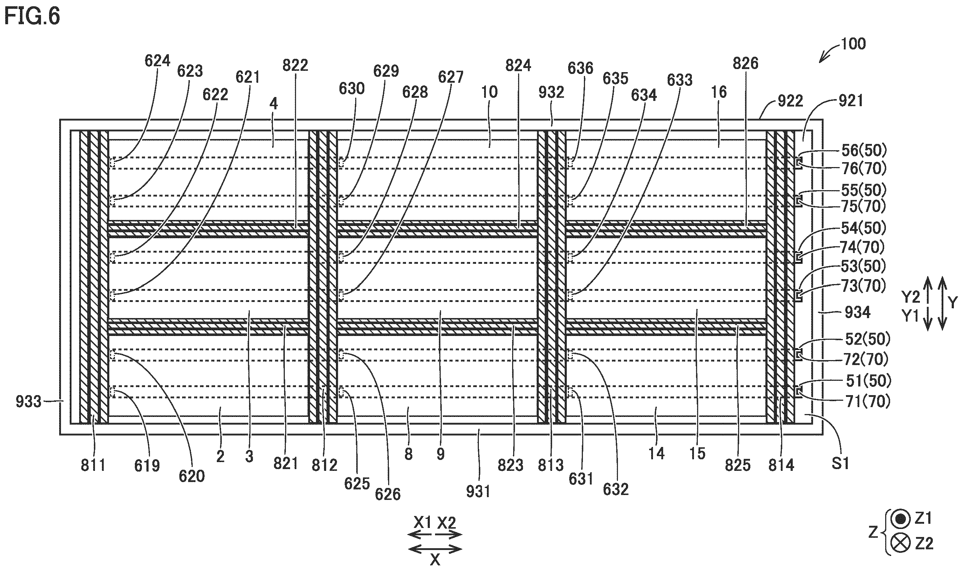

Power storage unit 110 includes 18 terminal units disposed above a center of power storage unit 110 in the upward/downward direction (or the direction Z) and 18 terminal units disposed below the center of power storage unit 110 in the upward/downward direction (or the direction Z). The terminal unit will now be described with reference to Figs. 5 and 6.

Fig. 5 shows an interior of power storage device 100, as viewed from above power storage device 100, with upper case 91 removed therefrom. In Fig. 5, reinforcement members 811 to 814 and coolers 31 to 33 are hatched in order to make the drawing easy to see. Furthermore, in Fig. 5, the first smoke exhaust unit formed in the upper surface of each upper module is not shown to make the drawing easy to see.

Referring to Fig. 5, when the interior of power storage device 100 is viewed from above power storage device 100, upper modules 1, 5-7, 11-13, 17 and 18 disposed above coolers 31 to 33 are visibly recognized. Each upper module includes a positive electrode terminal unit and a negative electrode terminal unit. Each upper module has the positive and negative electrode terminal units located above the center of power storage unit 110 in the upward/downward direction (or the direction Z). In the present embodiment, each upper module has the positive and negative electrode terminal units located on an upper surface of power storage cell 111 (see Figs. 7 and 8) of the upper module.

More specifically, upper module 1 includes a positive electrode terminal unit 601 and a negative electrode terminal unit 602. Positive electrode terminal unit 601 and negative electrode terminal unit 602 are disposed on an upper surface of power storage cell 111 of upper module 1. Upper module 5 includes a positive electrode terminal unit 603 and a negative electrode terminal unit 604. Positive electrode terminal unit 603 and negative electrode terminal unit 604 are disposed on an upper surface of power storage cell 111 of upper module 5. Upper module 6 includes a positive electrode terminal unit 605 and a negative electrode terminal unit 606. Positive electrode terminal unit 605 and negative electrode terminal unit 606 are disposed on an upper surface of power storage cell 111 of upper module 6. Upper module 7 includes a positive electrode terminal unit 607 and a negative electrode terminal unit 608. Positive electrode terminal unit 607 and negative electrode terminal unit 608 are disposed on an upper surface of power storage cell 111 of upper module 7. Upper module 11 includes a positive electrode terminal unit 609 and a negative electrode terminal unit 610. Positive electrode terminal unit 609 and negative electrode terminal unit 610 are disposed on an upper surface of power storage cell 111 of upper module 11. Upper module 12 includes a positive electrode terminal unit 611 and a negative electrode terminal unit 612. Positive electrode terminal unit 611 and negative electrode terminal unit 612 are disposed on an upper surface of power storage cell 111 of upper module 12. Upper module 13 includes a positive electrode terminal unit 613 and a negative electrode terminal unit 614. Positive electrode terminal unit 613 and negative electrode terminal unit 614 are disposed on an upper surface of power storage cell 111 of upper module 13. Upper module 17 includes a positive electrode terminal unit 615 and a negative electrode terminal unit 616. Positive electrode terminal unit 615 and negative electrode terminal unit 616 are disposed on an upper surface of power storage cell 111 of upper module 17. Upper module 18 includes a positive electrode terminal unit 617 and a negative electrode terminal unit 618. Positive electrode terminal unit 617 and negative electrode terminal unit 618 are disposed on an upper surface of power storage cell 111 of upper module 18.

Each upper module may not have its positive and negative electrode terminal units located on the upper surface of power storage cell 111 of the upper module. Each upper module may have its positive and negative electrode terminal units at any location above the center of power storage unit 110 in the upward/downward direction (or the direction Z).

Fig. 6 shows an interior of power storage device 100, as viewed from above power storage device 100, while coolers 31 to 33 and any components located above coolers 31 to 33 are removed. In Fig. 6, reinforcement members 811-814 and 821-826 are hatched in order to make the drawing easy to see.

Referring to Fig. 6, when coolers 31 to 33 and any component located above coolers 31 to 33 are removed and the interior of power storage device 100 is viewed from above power storage device 100, lower modules 2 to 4, 8 to 10, and 14 to 16 disposed below coolers 31 to 33 and reinforcement members 811-814 and 821-826 are visibly recognized.

Reinforcement member 821 is disposed between lower modules 2 and 3. Reinforcement member 822 is disposed between lower modules 3 and 4. Lower modules 2 to 4 are disposed between reinforcement members 811 and 812.

Reinforcement member 823 is disposed between lower modules 8 and 9. Reinforcement member 824 is disposed between lower modules 9 and 10. Lower modules 8 to 10 are disposed between reinforcement members 812 and 813.

Reinforcement member 825 is disposed between lower modules 14 and 15. Reinforcement member 826 is disposed between lower modules 15 and 16. Lower modules 14 to 16 are disposed between reinforcement members 813 and 814.

Each lower module includes a positive electrode terminal unit and a negative electrode terminal unit. Each lower module has the positive and negative electrode terminal units located below the center of power storage unit 110 in the upward/downward direction (or the direction Z). In the present embodiment, each lower module has the positive and negative electrode terminal units located on a lower surface of power storage cell 111 of the lower module.

More specifically, lower module 2 includes a positive electrode terminal unit 619 and a negative electrode terminal unit 620. Positive electrode terminal unit 619 and negative electrode terminal unit 620 are disposed on a lower surface of power storage cell 111 of lower module 2. Lower module 3 includes a positive electrode terminal unit 621 and a negative electrode terminal unit 622. Positive electrode terminal unit 621 and negative electrode terminal unit 622 are disposed on a lower surface of power storage cell 111 of lower module 3. Lower module 4 includes a positive electrode terminal unit 623 and a negative electrode terminal unit 624. Positive electrode terminal unit 623 and negative electrode terminal unit 624 are disposed on a lower surface of power storage cell 111 of lower module 4. Lower module 8 includes a positive electrode terminal unit 625 and a negative electrode terminal unit 626. Positive electrode terminal unit 625 and negative electrode terminal unit 626 are disposed on a lower surface of power storage cell 111 of lower module 8. Lower module 9 includes a positive electrode terminal unit 627 and a negative electrode terminal unit 628. Positive electrode terminal unit 627 and negative electrode terminal unit 628 are disposed on a lower surface of power storage cell 111 of lower module 9. Lower module 10 includes a positive electrode terminal unit 629 and a negative electrode terminal unit 630. Positive electrode terminal unit 629 and negative electrode terminal unit 630 are disposed on a lower surface of power storage cell 111 of lower module 10. Lower module 14 includes a positive electrode terminal unit 631 and a negative electrode terminal unit 632. Positive electrode terminal unit 631 and negative electrode terminal unit 632 are disposed on a lower surface of power storage cell 111 of lower module 14. Lower module 15 includes a positive electrode terminal unit 633 and a negative electrode terminal unit 634. Positive electrode terminal unit 633 and negative electrode terminal unit 634 are disposed on a lower surface of power storage cell 111 of lower module 15. Lower module 16 includes a positive electrode terminal unit 635 and a negative electrode terminal unit 636. Positive electrode terminal unit 635 and negative electrode terminal unit 636 are disposed on a lower surface of power storage cell 111 of lower module 16.

Each lower module may not have its positive and negative electrode terminal units located on the lower surface of power storage cell 111 of the lower module. Each lower module may have its positive and negative electrode terminal units at any location below the center of power storage unit 110 in the upward/downward direction (or the direction Z).

Reference will now be made to Figs. 4 to 6 to describe electrical connection of power storage unit 110. Upper modules 1, 5-7, 11-13, 17 and 18 and lower modules 2-4, 8-10, 14-16 are connected in series by bus bars.

Positive electrode terminal unit 601 of upper module 1 serves as a general positive electrode terminal unit of power storage unit 110. Negative electrode terminal unit 602 of upper module 1 and positive electrode terminal unit 619 of lower module 2 are connected by a bus bar 211. Negative electrode terminal unit 620 of lower module 2 and positive electrode terminal unit 621 of lower module 3 are connected by a bus bar 212. Negative electrode terminal unit 622 of lower module 3 and positive electrode terminal unit 623 of lower module 4 are connected by a bus bar 213. Negative electrode terminal unit 624 of lower module 4 and positive electrode terminal unit 603 of upper module 5 are connected by a bus bar 214. Negative electrode terminal unit 604 of upper module 5 and positive electrode terminal unit 605 of upper module 6 are connected by a bus bar 215. Negative electrode terminal unit 606 of upper module 6 and positive electrode terminal unit 607 of upper module 7 are connected by a bus bar 251.

Negative electrode terminal unit 608 of upper module 7 and positive electrode terminal unit 625 of lower module 8 are connected by a bus bar 221. Negative electrode terminal unit 626 of lower module 8 and positive electrode terminal unit 627 of lower module 9 are connected by a bus bar 222. Negative electrode terminal unit 628 of lower module 9 and positive electrode terminal unit 629 of lower module 10 are connected by a bus bar 223. Negative electrode terminal unit 630 of lower module 10 and positive electrode terminal unit 609 of upper module 11 are connected by a bus bar 224. Negative electrode terminal unit 610 of upper module 11 and positive electrode terminal unit 611 of upper module 12 are connected by a bus bar 225. Negative electrode terminal unit 612 of upper module 12 and positive electrode terminal unit 613 of upper module 13 are connected by a bus bar 252.

Negative electrode terminal unit 614 of upper module 13 and positive electrode terminal unit 631 of lower module 14 are connected by a bus bar 231. Negative electrode terminal unit 632 of lower module 14 and positive electrode terminal unit 633 of lower module 15 are connected by a bus bar 232. Negative electrode terminal unit 634 of lower module 15 and positive electrode terminal unit 635 of lower module 16 are connected by a bus bar 233. Negative electrode terminal unit 636 of lower module 16 and positive electrode terminal unit 615 of upper module 17 are connected by a bus bar 234. Negative electrode terminal unit 616 of upper module 17 and positive electrode terminal unit 617 of upper module 18 are connected by a bus bar 235. Negative electrode terminal unit 618 of upper module 18 serves as a general negative electrode terminal unit of power storage unit 110.

Note that the electrical connection of power storage unit 110 described with reference to Figs. 4 to 6 is not exclusive. Furthermore, power storage unit 110 may not include nine power storage modules. Power storage unit 110 may include one or more power storage modules.

Recess 50 will now be described in more detail with reference to Figs. 6 to 8. Fig. 7 is a cross section taken along a line VII-VII indicated in Fig. 5. Fig. 8 is a cross section taken along a line VIII-VIII indicated in Fig. 5.

Referring to Fig. 7, side wall 931, power storage module M1, reinforcement member 821, power storage module M2, reinforcement member 822, power storage module M3, and side wall 932 are disposed in this order in the direction Y. Side wall 931 is an example of a "first side wall" in the present disclosure, and side wall 932 is an example of a "second side wall" in the present disclosure. Power storage module M1 is an example of a "first power storage module" in the present disclosure. Power storage module M2 is an example of a "second power storage module" in the present disclosure. Reinforcement member 821 is an example of a "first reinforcement member" in the present disclosure, and reinforcement member 822 is an example of a "second reinforcement member" in the present disclosure.

As has been described above, power storage module M1 includes upper module 1 and lower module 2. Power storage module M2 includes upper module 6 and lower module 3. Power storage module M3 includes upper module 5 and lower module 4.

Power storage module M1 is provided with four terminal units. More specifically, power storage module M1 is provided with positive electrode terminal units 601 and 619 and negative electrode terminal units 602 and 620.

Positive electrode terminal unit 601 and negative electrode terminal unit 602 are disposed above the center of power storage unit 110 in the upward/downward direction (or the direction Z). An imaginary line P1 indicates a location for the center of power storage unit 110 in the upward/downward direction (or the direction Z). More specifically, positive electrode terminal unit 601 and negative electrode terminal unit 602 are provided on the upper surface of power storage cell 111 of upper module 1. In the present embodiment, positive electrode terminal unit 601 and negative electrode terminal unit 602 project upward through cell case 1a of upper module 1. Cell case 1a includes an upper wall 1b and a lower wall spaced from each other in the upward/downward direction (or the direction Z). Upper wall 1b has first smoke exhaust unit 851 formed therethrough to exhaust gas present in upper module 1.

Positive electrode terminal unit 619 and negative electrode terminal unit 620 are each an example of a "first terminal unit" in the present disclosure. Positive electrode terminal unit 619 and negative electrode terminal unit 620 are disposed below the center of power storage unit 110 in the upward/downward direction (or the direction Z). More specifically, positive electrode terminal unit 619 and negative electrode terminal unit 620 are provided on the lower surface of power storage cell 111 of lower module 2. In the present embodiment, positive electrode terminal unit 619 and negative electrode terminal unit 620 project downward through cell case 2a of lower module 2. Cell case 2a includes an upper wall and a lower wall 2b spaced from each other in the upward/downward direction (or the direction Z). Lower wall 2b has second smoke exhaust unit 852 formed therethrough to exhaust gas present in lower module 2.

Power storage module M2 is provided with four terminal units. More specifically, power storage module M2 is provided with positive electrode terminal units 605 and 621 and negative electrode terminal units 606 and 622.

Positive electrode terminal unit 605 and negative electrode terminal unit 606 are disposed above the center of power storage unit 110 in the upward/downward direction (or the direction Z). More specifically, positive electrode terminal unit 605 and negative electrode terminal unit 606 are provided on the upper surface of power storage cell 111 of upper module 6. In the present embodiment, positive electrode terminal unit 605 and negative electrode terminal unit 606 project upward through cell case 6a of upper module 6. Cell case 6a includes an upper wall 6b and a lower wall spaced from each other in the upward/downward direction (or the direction Z). Upper wall 6b has first smoke exhaust unit 856 formed therethrough to exhaust gas present in upper module 6.

Positive electrode terminal unit 621 and negative electrode terminal unit 622 are each an example of a "second terminal unit" in the present disclosure. Positive electrode terminal unit 621 and negative electrode terminal unit 622 are disposed below the center of power storage unit 110 in the upward/downward direction (or the direction Z). More specifically, positive electrode terminal unit 621 and negative electrode terminal unit 622 are provided on the lower surface of power storage cell 111 of lower module 3. In the present embodiment, positive electrode terminal unit 621 and negative electrode terminal unit 622 project downward through cell case 3a of lower module 3. Cell case 3a includes an upper wall and a lower wall 3b spaced from each other in the upward/downward direction (or the direction Z). Lower wall 3b has second smoke exhaust unit 853 formed therethrough to exhaust gas present in lower module 3.

Power storage module M3 is provided with four terminal units. More specifically, power storage module M3 is provided with positive electrode terminal units 603 and 623 and negative electrode terminal units 604 and 624.

Positive electrode terminal unit 603 and negative electrode terminal unit 604 are disposed above the center of power storage unit 110 in the upward/downward direction (or the direction Z). More specifically, positive electrode terminal unit 603 and negative electrode terminal unit 604 are provided on the upper surface of power storage cell 111 of upper module 5. In the present embodiment, positive electrode terminal unit 603 and negative electrode terminal unit 604 project upward through cell case 5a of upper module 5. Cell case 5a includes an upper wall 5b and a lower wall spaced from each other in the upward/downward direction (or the direction Z). Upper wall 5b has first smoke exhaust unit 855 formed therethrough to exhaust gas present in upper module 5.

Positive electrode terminal unit 623 and negative electrode terminal unit 624 are disposed below the center of power storage unit 110 in the upward/downward direction (or the direction Z). More specifically, positive electrode terminal unit 623 and negative electrode terminal unit 624 are provided on the lower surface of power storage cell 111 of lower module 4. In the present embodiment, positive electrode terminal unit 623 and negative electrode terminal unit 624 project downward through cell case 4a of lower module 4. Cell case 4a includes an upper wall and a lower wall 4b spaced from each other in the upward/downward direction (or the direction Z). Lower wall 4b has second smoke exhaust unit 854 formed therethrough to exhaust gas present in lower module 4.

Note that positive electrode terminal units 607, 609, 611, 613, 615, 617 and negative electrode terminal units 608, 610, 612, 614, 616, 618 (see Fig. 5) are each provided on the upper surface of power storage cell 111 of the respective upper module and each project upward through the cell case of the upper module. Positive electrode terminal units 625, 627, 629, 631, 633, 635 and negative electrode terminal units 626, 628, 630, 632, 634, 636 (see Fig. 6) are each provided on the lower surface of power storage cell 111 of the respective lower module and each project downward through the cell case of the lower module.

Referring to Figs. 6 and 7, lower case 92 has bottom wall 921 with recess 50 recessed downward. Recess 50 extends in the direction X. Recess 50 is formed below the positive and negative electrode terminal units of lower modules 2 to 4, 8 to 10, and 14 to 16. Recess 50 includes grooves 51 to 56. A region of recess 50 located on a front side of vehicle 150 (see Fig. 1) and a region of recess 50 located on a rear side of vehicle 150 are equal in depth. In the present disclosure, being "substantially equal" means that some error is included due to manufacturing variation or the like.

Grooves 51 and 52 are each an example of a "first groove" in the present disclosure. Groove 51 is formed below positive electrode terminal units 619, 625, and 631. Groove 51 extends in the direction X and includes a bottom surface 51a extending in the direction X. Groove 52 is formed below negative electrode terminal units 620, 626, and 632. Groove 52 extends in the direction X and includes a bottom surface 52a extending in the direction X. Bottom surfaces 51a and 52a are each an example of a "first bottom surface" in the present disclosure.

With reference to Figs. 6 to 8, grooves 53 and 54 are each an example of a "second groove" in the present disclosure. Groove 53 is formed below positive electrode terminal units 621, 627, and 633. Groove 53 extends in the direction X and includes a bottom surface 53a extending in the direction X. Groove 54 is formed below negative electrode terminal units 622, 628, and 634. Groove 54 extends in the direction X and includes a bottom surface 54a extending in the direction X. Bottom surfaces 53a and 54a are each an example of a "second bottom surface" in the present disclosure.

Referring to Figs. 6 and 7, groove 55 is formed below positive electrode terminal units 623, 629, and 635. Groove 55 extends in the direction X and includes a bottom surface 55a extending in the direction X. Groove 56 is formed below negative electrode terminal units 624, 630, and 636. Groove 56 extends in the direction X and includes a bottom surface 56a extending in the direction X.

Referring to Fig. 7, a distance r1 between power storage module M1 and side wall 931 is shorter than a distance d1 between positive electrode terminal unit 619 and bottom surface 51a. Distance r1 between power storage module M1 and side wall 931 is shorter than a distance d2 between negative electrode terminal unit 620 and bottom surface 52a.

A distance r2 between power storage module M1 and reinforcement member 821 is shorter than distance d1 between positive electrode terminal unit 619 and bottom surface 51a. Distance r2 between power storage module M1 and reinforcement member 821 is shorter than distance d2 between negative electrode terminal unit 620 and bottom surface 52a.

A distance r3 between power storage module M2 and reinforcement member 821 is shorter than a distance d3 between positive electrode terminal unit 621 and bottom surface 53a. Distance r3 between power storage module M2 and reinforcement member 821 is shorter than a distance d4 between negative electrode terminal unit 622 and bottom surface 54a.

A distance r4 between power storage module M2 and reinforcement member 822 is shorter than distance d3 between positive electrode terminal unit 621 and bottom surface 53a. Distance r4 between power storage module M2 and reinforcement member 822 is shorter than distance d4 between negative electrode terminal unit 622 and bottom surface 54a.

A distance r5 between power storage module M3 and reinforcement member 822 is shorter than a distance d5 between positive electrode terminal unit 623 and bottom surface 55a. Distance r5 between power storage module M3 and reinforcement member 822 is shorter than a distance d6 between negative electrode terminal unit 624 and bottom surface 56a.

A distance r6 between power storage module M3 and side wall 932 is shorter than distance d5 between positive electrode terminal unit 623 and bottom surface 55a. Distance r6 between power storage module M3 and side wall 932 is shorter than distance d6 between negative electrode terminal unit 624 and bottom surface 56a.

Referring to Figs. 6 and 8, power storage device 100 has a space formed therein in communication with one end portion of recess 50 in the direction X and extending upward. In the present embodiment, power storage device 100 has a space S1 formed therein in communication with a rear end portion of recess 50 in the direction X and extending upward. The rear end portion of recess 50 is one of the two end portions of recess 50 in the direction X that is located on the rear side of vehicle 150 (see Fig. 1).

In the direction X grooves 51 to 56 each have a rear end portion in communication with space S1. The rear end portion of each of grooves 51 to 56 is one of the two end portions of each of grooves 51 to 56 in the direction X that is located on the rear side of vehicle 150. A rear end portion 53b shown in Fig. 8 is one of the two end portions of groove 53 in the direction X that is located on the rear side of vehicle 150. Space S1 is larger in volume than each of grooves 51 to 56.

Power storage device 100 further comprises a case smoke exhaust valve 85 (see Fig. 8) to exhaust gas present in power storage device 100. Case smoke exhaust valve 85 may for example be a check valve. Case smoke exhaust valve 85 is provided at accommodation case 90. More specifically, case smoke exhaust valve 85 is provided at a portion of accommodation case 90 that defines space S1. In the present embodiment, case smoke exhaust valve 85 is provided at a portion of accommodation case 90 that defines space S1 above a center of accommodation case 90 in the upward/downward direction (or the direction Z). An imaginary line P2 shown in Fig. 8 indicates a location for the center of accommodation case 90 in the upward/downward direction (or the direction Z). In the example shown in Fig. 8, case smoke exhaust valve 85 is provided at upper case 91 that defines space S1.

Recess 50 and space S1 function as a smoke exhaust path for gas exhausted from power storage modules M1 to M9 (see Fig. 4). More specifically, recess 50 and space S1 mainly function as a smoke exhaust path for gas exhausted from lower modules 2 to 4, 8 to 10, and 14 to 16. The gas exhausted from lower modules 2 to 4, 8 to 10, and 14 to 16 mainly flows through recess 50 to space S1 and is exhausted out of power storage device 100 through case smoke exhaust valve 85. In contrast, gas exhausted from upper modules 1, 5-7, 11-13, 17 and 18 (see Fig. 4) mainly flows above the upper modules to space S1 and is exhausted out of power storage device 100 through case smoke exhaust valve 85. For example, as shown in Fig. 8, gas exhausted from upper module 6 mainly flows above upper module 6 to space S1 and is exhausted out of power storage device 100 through case smoke exhaust valve 85.

Recess 50 formed below a terminal unit disposed below the center of power storage unit 110 in the upward/downward direction (or the direction Z) provides an increased distance between the terminal unit and accommodation case 90 (more specifically, lower case 92). This can suppress formation of a short circuit between the terminal unit and accommodation case 90 (more specifically, lower case 92) due to a conductive foreign matter contained in gas exhausted from power storage modules M1 to M9. Furthermore, it can also suppress formation of a short circuit between the terminal unit and accommodation case 90 (more specifically, lower case 92) due to condensed water produced as power storage cell 111 having high temperature is cooled.

Providing power storage device 100 with space S1 in communication with one end portion of recess 50 in the direction X and extending upward, and case smoke exhaust valve 85 at a portion of accommodation case 90 that defines space S1, allows recess 50 and space S1 to function as a smoke exhaust path for gas exhausted from power storage modules M1 to M9. This allows the gas exhausted from power storage modules M1 to M9 to be efficiently exhausted out of power storage device 100.

Case smoke exhaust valve 85 provided at a portion of accommodation case 90 that defines space S1 above the center of accommodation case 90 in the upward/downward direction (or the direction Z) allows not only gas exhausted from lower modules 2 to 4, 8 to 10, and 14 to 16 but also gas exhausted from upper modules 1, 5-7, 11-13, 17 and 18 to be efficiently exhausted out of power storage device 100.

First smoke exhaust units 851, 855-857, 861-863, 867, 868 and second smoke exhaust units 852-854, 858-860, 864-866 exhaust not only gas but also blast (see Fig. 4). As space S1 is larger in volume than each of grooves 51 to 56, space S1 can retain blast exhausted through first smoke exhaust units 851, 855-857, 861-863, 867, 868 and second smoke exhaust units 852-854, 858-860, 864-866. This can suppress exhaust of blast through case smoke exhaust valve 85.

A relationship in magnitude between distances r1, r2, d1, and d2 (see Fig. 7) helps gas exhausted through second smoke exhaust unit 852 to be exhausted to space S1 through grooves 51 and 52. This can suppress passage of the gas that is exhausted through second smoke exhaust unit 852 through a gap between power storage module M1 and side wall 931 or a gap between power storage module M1 and reinforcement member 821 to spread inside accommodation case 90.

A relationship in magnitude between distances r3, r4, d3, and d4 (see Fig. 7) helps gas exhausted through second smoke exhaust unit 853 to be exhausted to space S1 through grooves 53 and 54. This can suppress passage of the gas that is exhausted through second smoke exhaust unit 853 through a gap between power storage module M2 and reinforcement member 821 or a gap between power storage module M2 and reinforcement member 822 to spread inside accommodation case 90.

A relationship in magnitude between distances r5, r6, d5, and d6 (see Fig. 7) helps gas exhausted through second smoke exhaust unit 854 to be exhausted to space S1 through grooves 55 and 56. This can suppress passage of the gas that is exhausted through second smoke exhaust unit 854 through a gap between power storage module M3 and reinforcement member 822 or a gap between power storage module M3 and side wall 932 to spread inside accommodation case 90.

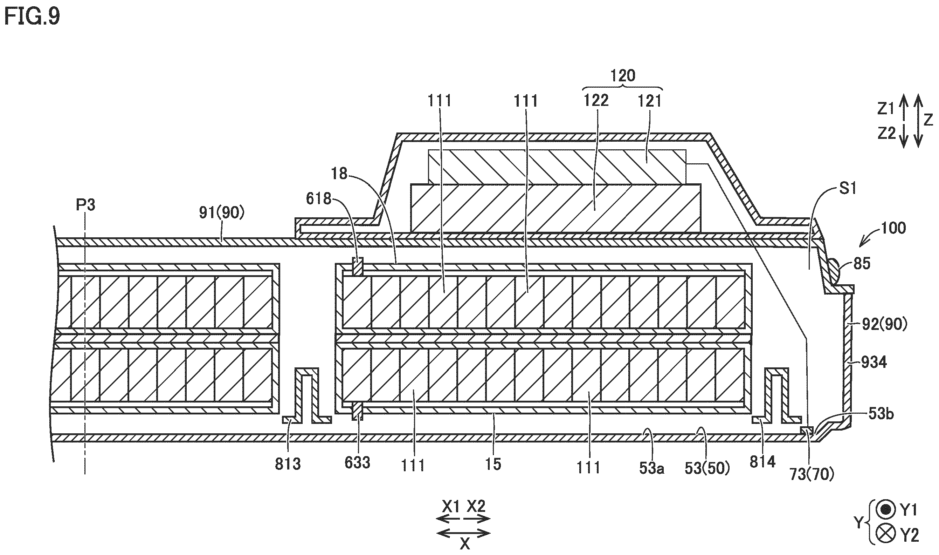

Reference will now be made to Figs. 6 and 9 to describe sensor 70. Fig. 9 is a cross section of power storage device 100 and device unit 120 taken along a line VIII-VIII indicated in Fig. 5. As shown in Fig. 6, sensor 70 includes sensors 71 to 76.

Sensors 71 to 76 each senses water. Sensors 71 to 76 are each provided at one end portion of recess 50 in the direction X. In the present embodiment, sensors 71 to 76 are each provided at a rear end portion of recess 50 in the direction X. More specifically, sensor 71 is provided at a rear end portion of groove 51 in the direction X. Sensor 72 is provided at a rear end portion of groove 52 in the direction X. Sensor 73 is provided at rear end portion 53b (see Fig. 9) of groove 53 in the direction X. Sensor 74 is provided at a rear end portion of groove 54 in the direction X. Sensor 75 is provided at a rear end portion of groove 55 in the direction X. Sensor 76 is provided at a rear end portion of groove 56 in the direction X. Sensors 71 to 76 are each disposed on a side of vehicle 150 (see Fig. 1) rearward of the center of power storage device 100 in the direction X. An imaginary line P3 indicated in Fig. 9 indicates a location for the center of power storage device 100 in the direction X.

Device unit 120 is disposed above power storage device 100 on a side of vehicle 150 rearward of the center of power storage device 100 in the direction X. Device unit 120 includes an electronic control unit 121 and a junction box 122. Electronic control unit 121 is an example of an "electrical device" in the present disclosure. Electronic control unit 121 is disposed above power storage device 100 on a side of vehicle 150 rearward of the center of power storage device 100 in the direction X. Electronic control unit 121 is connected to each of sensors 71 to 76. Electronic control unit 121 receives notification from each of sensors 71 to 76 indicating detection of water and controls power storage device 100 based on the notification.

Sensors 71 to 76 provided at grooves 51 to 56, respectively, can quickly sense condensed water accumulated in the grooves. The condensed water accumulated in each of grooves 51 to 56 moves to the rear end portion of each of grooves 51 to 56 in the direction X as vehicle 150 is accelerated. Sensors 71 to 76 each provided at the rear end portion of recess 50 in the direction X can quickly sense condensed water.

Furthermore, disposing electronic control unit 121 and sensors 71 to 76 both on a side of vehicle 150 rearward of the center of power storage device 100 in the direction X helps interconnecting sensors 71 to 76 and electronic control unit 121.

Thus, in the present embodiment, recess 50 is formed below a terminal unit disposed below the center of power storage unit 110 in the upward/downward direction (or the direction Z). This provides an increased distance between the terminal unit and accommodation case 90 (more specifically, lower case 92). This can suppress formation of a short circuit between the terminal unit and accommodation case 90 (more specifically, lower case 92) due to a conductive foreign matter contained in gas exhausted from power storage modules M1 to M9. Furthermore, it can also suppress formation of a short circuit between the terminal unit and accommodation case 90 (more specifically, lower case 92) due to condensed water produced as power storage cell 111 having high temperature is cooled.

While in the above embodiment power storage unit 110 includes 18 terminal units as a terminal unit disposed below the center of power storage unit 110 in the upward/downward direction (or the direction Z), this is not exclusive. Power storage unit 110 may include at least one terminal unit as a terminal unit disposed below the center of power storage unit 110 in the upward/downward direction (or the direction Z), and recess 50 may be formed below the at least one terminal unit.

### [First Variation]

First smoke exhaust units 851, 855-857, 861-863, 867, 868 may each be a cell smoke exhaust valve provided at power storage cell 111. Furthermore, first smoke exhaust units 851, 855-857, 861-863, 867, 868 may each be configured to have a smoke exhaust port covered with a resin member or the like configured to break in response to high temperature or high pressure.

Second smoke exhaust units 852-854, 858-860, 864-866 may each be a cell smoke exhaust valve provided at power storage cell 111. Furthermore, second smoke exhaust units 852-854, 858-860, 864-866 may each be configured to have a smoke exhaust port covered with a resin member or the like configured to break in response to high temperature or high pressure.

### [Second Variation]

Power storage device 100 may not have space S1 and instead have a front space in communication with a front end portion of recess 50 in the direction X and extending upward. The front end portion of recess 50 is one of the two end portions of recess 50 in the direction X that is located on a front side of vehicle 150. When power storage device 100 has the front space therein, grooves 51 to 56 each have a front end portion in communication with the front space. The front end portion of each of grooves 51 to 56 are one of the two end portions of each of grooves 51 to 56 in the direction X that is located on the front side of vehicle 150. A front end portion 53c shown in Fig. 8 is one of the two end portions of groove 53 in the direction X that is located on the front side of vehicle 150. The front space is larger in volume than each of grooves 51 to 56. Case smoke exhaust valve 85 may be provided at a portion of accommodation case 90 that defines the front space.

Providing power storage device 100 with the front space, and case smoke exhaust valve 85 at a portion of accommodation case 90 that defines the front space, allows recess 50 and the front space to function as a smoke exhaust path for gas exhausted from power storage modules M1 to M9. This allows the gas exhausted from power storage modules M1 to M9 to be efficiently exhausted out of power storage device 100.

### [Third Variation]

Sensors 71 to 76 may each be provided at a front end portion of recess 50 in the direction X. As one example, sensor 73 may be provided at front end portion 53c (see Fig. 8) of groove 53 in the direction X.

Condensed water accumulated in each of grooves 51 to 56 moves to the front end portion of each of grooves 51 to 56 when vehicle 150 decelerates. Sensors 71 to 76 each provided at the front end portion of recess 50 in the direction X can thus quickly sense condensed water.

Note that a sensor that senses water may be provided at both the front end portion of recess 50 in the direction X and the rear end portion of recess 50 in the direction X.

### [Fourth Variation]

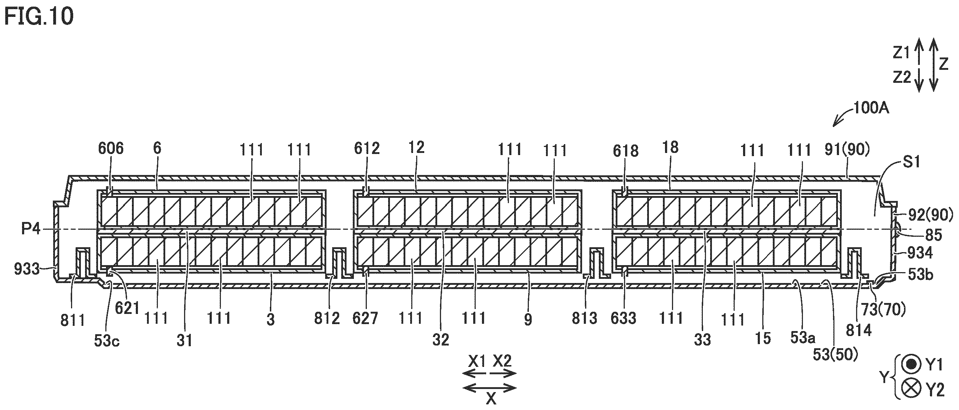

Fig. 10 is a cross section of a power storage device according to a fourth variation taken in the longitudinal direction of the vehicle. Fig. 10 is a cross section taken along line VIII-VIII (see Fig. 5) when a power storage device 100A according to the fourth variation is employed in place of power storage device 100.

Power storage device 100A according to the fourth variation is different from power storage device 100 in where case smoke exhaust valve 85 is provided. Power storage device 100A according to the fourth variation is provided with case smoke exhaust valve 85 at a portion of accommodation case 90 that defines space S1 at a center of accommodation case 90 in the upward/downward direction (or the direction Z). An imaginary line P4 indicates a location for the center of accommodation case 90 in the upward/downward direction (or the direction Z) in the fourth variation. In the example shown in Fig. 10, case smoke exhaust valve 85 is provided at lower case 92 that defines space S1.

Case smoke exhaust valve 85 provided at the portion of accommodation case 90 that defines space S1 at the center of accommodation case 90 in the upward/downward direction (or the direction Z) allows not only gas exhausted from lower modules 2 to 4, 8 to 10, and 14 to 16 (see Fig. 4) but also gas exhausted from upper modules 1, 5-7, 11-13, 17 and 18 (see Fig. 4) to be efficiently exhausted out of power storage device 100A.

### [Fifth Variation]

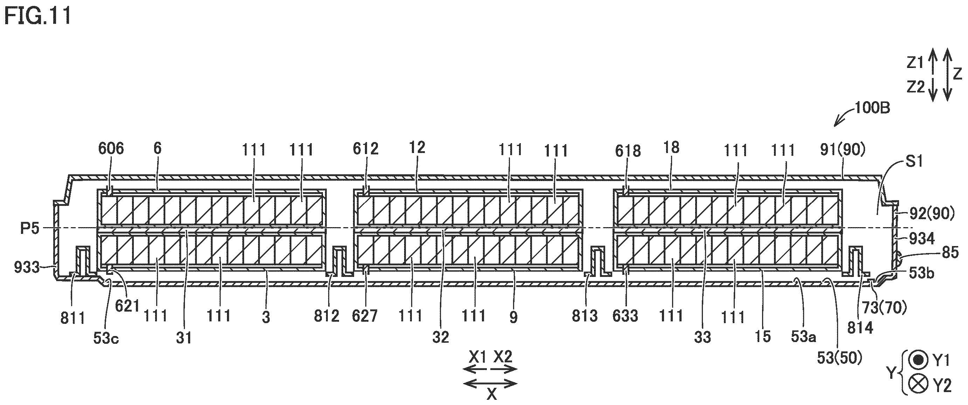

Fig. 11 is a cross section of a power storage device according to a fifth variation taken in the longitudinal direction of the vehicle. Fig. 11 is a cross section taken along line VIII-VIII (see Fig. 5) when a power storage device 100B according to the fifth variation is employed in place of power storage device 100.

Power storage device 100B according to the fifth variation is different from power storage device 100 in where case smoke exhaust valve 85 is provided. Power storage device 100B according to the fifth variation is provided with case smoke exhaust valve 85 at a portion of accommodation case 90 that defines space S1 below the center of accommodation case 90 in the upward/downward direction (or the direction Z). An imaginary line P5 indicates a location for the center of accommodation case 90 in the upward/downward direction (or the direction Z) in the fifth variation. In the example shown in Fig. 11, case smoke exhaust valve 85 is provided at lower case 92 that defines space S1.

Case smoke exhaust valve 85 provided at a portion of accommodation case 90 that defines space S1 below the center of accommodation case 90 in the upward/downward direction (or the direction Z) allows gas exhausted from lower modules 2 to 4, 8 to 10, and 14 to 16 (see Fig. 4) to be efficiently exhausted out of power storage device 100B.

### [Sixth Variation]

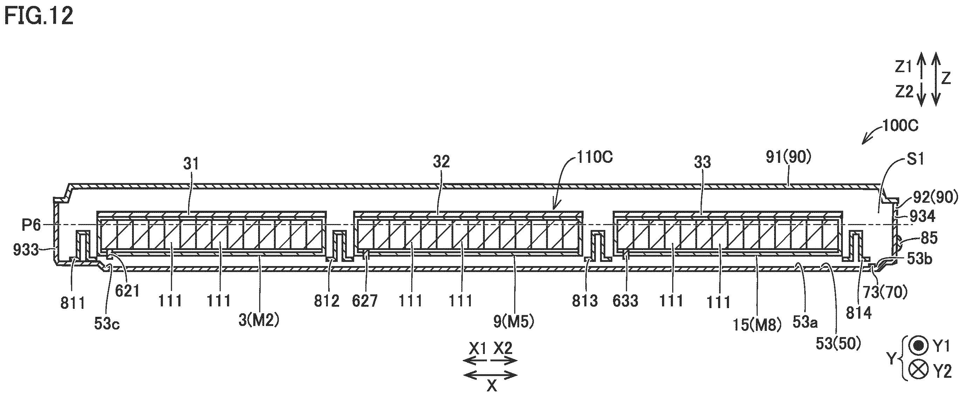

Fig. 12 is a cross section of a power storage device according to a sixth variation taken in the longitudinal direction of the vehicle. Fig. 12 is a cross section taken along line VIII-VIII (see Fig. 5) when a power storage device 100C according to the sixth variation is employed in place of power storage device 100.

Power storage device 100C according to the sixth variation is different from power storage device 100 in that power storage device 100C is provided with a power storage unit 110C in place of power storage unit 110 (see Fig. 4) and in where case smoke exhaust valve 85 is provided. Power storage device 100C comprises power storage unit 110C in place of power storage unit 110. Power storage unit 110C only includes lower modules 2 to 4, 8 to 10, and 14 to 16 (see Fig. 4) as a power storage module. As has been described above, lower modules 2 to 4, 8 to 10, and 14 to 16 each have a lower surface with the second smoke exhaust unit (for example, second smoke exhaust units 852-854, 858-860, 864-866 shown in Fig. 4) to exhaust gas present in the lower module. Second smoke exhaust units 852-854, 858-860, 864-866 in the sixth variation are each an example of a "smoke exhaust unit" in the present disclosure.

Power storage device 100C according to the sixth variation is provided with case smoke exhaust valve 85 at a portion of accommodation case 90 that defines space S1 below the center of accommodation case 90 in the upward/downward direction (or the direction Z). An imaginary line P6 indicates a location for the center of accommodation case 90 in the upward/downward direction (or the direction Z) in the sixth variation. In the example shown in Fig. 12, case smoke exhaust valve 85 is provided at lower case 92 that defines space S1.

Case smoke exhaust valve 85 provided at a portion of accommodation case 90 that defines space S1 below the center of accommodation case 90 in the upward/downward direction (or the direction Z) allows gas exhausted from lower modules 2 to 4, 8 to 10, and 14 to 16 to be efficiently exhausted out of power storage device 100C.

### [Seventh Variation]

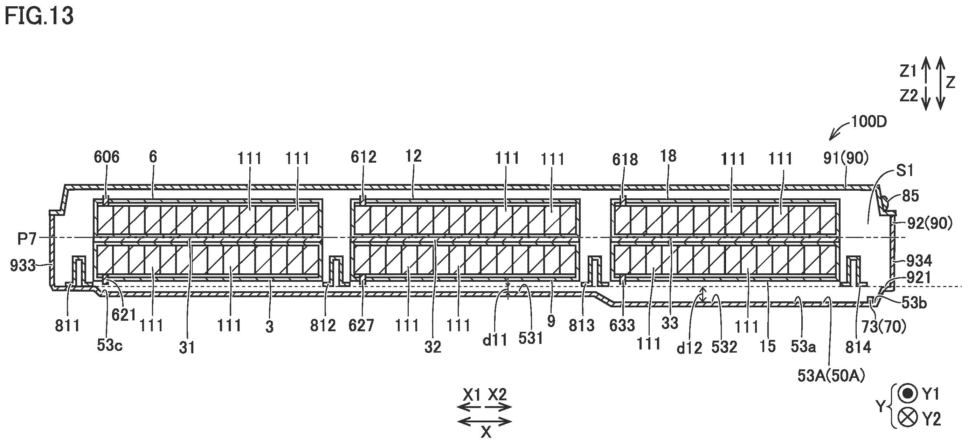

Fig. 13 is a cross section of a power storage device according to a seventh variation taken in the longitudinal direction of the vehicle. Fig. 13 is a cross section taken along line VIII-VIII (see Fig. 5) when a power storage device 100D according to the seventh variation is employed in place of power storage device 100. An imaginary line P7 indicates a location for the center of accommodation case 90 in the upward/downward direction (or the direction Z) in the seventh variation.

Power storage device 100D according to the seventh variation is different from power storage device 100 in that recess 50 is replaced with a recess 50A formed at bottom wall 921 of lower case 92. Recess 50A is different from recess 50 in that a region of recess 50A located on the front side of vehicle 150 is different in depth from a region of recess 50A located on the rear side of vehicle 150.

Recess 50A extends in the direction X. Recess 50A includes a first region 531 having a first depth d11 and a second region 532 having a second depth d12 larger than first depth d11. Recess 50A includes six grooves in place of grooves 51 to 56. The six grooves each include first region 531 having first depth d11 and second region 532 having second depth d12 larger than first depth d11. Fig. 13 shows a groove 53A in place of groove 53. Groove 53A includes first region 531 having first depth d11 and second region 532 having second depth d12 larger than first depth d11. Second region 532 is located on a side of vehicle 150 (see Fig. 1) rearward of first region 531.

While vehicle 150 is traveling, a conductive foreign matter contained in gas exhausted from power storage modules M1 to M9 tends to accumulate on the rear side of vehicle 150. Furthermore, while vehicle 150 is traveling, condensed water in recess 50A tends to accumulate on the rear side of vehicle 150. Recess 50A having a region located on the front side of vehicle 150 and a region located on the rear side of vehicle 150 and larger in depth than the region located on the front side of vehicle 150 can suppress formation of a short circuit between a terminal unit and accommodation case 90 (more specifically, lower case 92).

Furthermore, based on the relationship of the electrical connection of power storage unit 110 described with reference to Figs. 4 to 6, a power storage module located on a rearer side of vehicle 150 is higher in potential. The power storage module higher in potential is more likely to short-circuit between a terminal unit and accommodation case 90 (more specifically, lower case 92). Recess 50A having a region located on the front side of vehicle 150 and a region located on the rear side of vehicle 150 and larger in depth than the region located on the front side of vehicle 150 can suppress formation of a short circuit between the terminal unit and accommodation case 90 (more specifically, lower case 92).

Note that recess 50A may gradually be larger in depth toward the rear side of vehicle 150.

### [Eighth Variation]

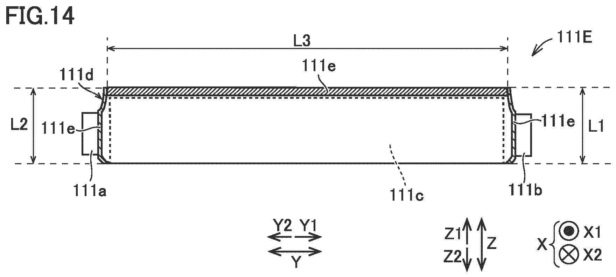

A power storage device according to an eighth variation is different from power storage device 100 in what form the power storage cell has. In the above embodiments, power storage cell 111 includes a cell body and a cell can that accommodates the cell body. In the eighth variation, in contrast, the power storage cell is a laminate cell as shown in Fig. 14.

Fig. 14 is a side view of a power storage cell included in the power storage device according to the eighth variation. A power storage cell 111E is an example of the power storage cell included in the power storage device according to the eighth variation. Power storage cell 111E is a laminate cell in the form of a rectangular parallelepiped elongate in the direction Y. More specifically, power storage cell 111E includes a cell body 111c and a laminate film 111d. Laminate film 111d wraps cell body 111c. Laminate film 111d has its edges welded together to provide a welded portion 111e (a shaded portion in Fig. 14). Welded portion 111e is formed at end portions of laminate film 111d on sides Y1, Y2, and Z1.

Welded portion 111e on side Y1 extends in the direction Z and has a length L1 in the direction Z. Welded portion 111e on side Y2 extends in the direction Z and has a length L2 in the direction Z. Welded portion 111e on side Z1 extends in the direction Y and has a length L3 in the direction Y. Length L3 is larger than each of lengths L1 and L2 (e.g., by 5 times or more).

Power storage cell 111E at one end thereof in the direction Y is provided with a positive electrode terminal 111a and power storage cell 111E at the other end thereof in the direction Y is provided with a negative electrode terminal 111b.

The power storage device according to the eighth variation comprises upper modules 1, 5-7, 11-13, 17 and 18 and lower modules 2 to 4, 8 to 10, and 14 to 16 (see Fig. 4) each with a plurality of power storage cells 111E aligned in the direction X.

Each power storage cell 111E may be a laminate cell in the form of a rectangular parallelepiped elongate in the direction X. In that case, upper modules 1, 5-7, 11-13, 17 and 18 and lower modules 2 to 4, 8 to 10, and 14 to 16 each have the plurality of power storage cells 111E aligned in the direction Y.

While embodiments of the present disclosure have been described, it should be understood that the embodiments disclosed herein are illustrative and non-restrictive in any respect. The scope of the present disclosure is defined by the terms of the claims and intended to encompass any change that falls within the meaning and scope equivalent to the terms of the claims.

## Claims

1. A power storage device comprising:
a power storage unit (110); and
an accommodation case (90) that accommodates the power storage unit (110),
the accommodation case (90) including an upper case (91) and a lower case (92) disposed below the upper case (91),
the lower case (92) including a bottom wall (921) and a peripheral wall (922) standing erect from a peripheral portion of the bottom wall (921),
the bottom wall (921) having a recess (50) recessed downwards,
the power storage unit (110) including at least one terminal unit (619-624) disposed below a center of the power storage unit (110) in an upward/downward direction,
the recess (50) being located below the at least one terminal unit (619-624).

2. The power storage device according to claim 1, the power storage device (100) being mounted in a vehicle (150),
the power storage device (100) further comprising a case smoke exhaust valve (85) provided at the accommodation case (90) to exhaust gas present in the power storage device (100), wherein
the recess (50) extends in a longitudinal direction of the vehicle (150),
the power storage device (100) has a space (S1) formed therein in communication with one end portion of the recess (50) in the longitudinal direction of the vehicle (150) and extending upward, and
the case smoke exhaust valve (85) is provided at a portion of the accommodation case (90) that defines the space (S1).

3. The power storage device according to claim 2, wherein
the power storage unit (110) includes a power storage module (M1),
the power storage module (M1) includes
an upper module (1), and
a lower module (2) disposed below the upper module (1),
the upper module (1) has an upper surface with a first smoke exhaust unit (851) to exhaust gas present in the upper module (1),
the lower module (2) has a lower surface with a second smoke exhaust unit (852) to exhaust gas present in the lower module (2), and
the case smoke exhaust valve (85) is provided at a center of the accommodation case (90) in the upward/downward direction or above the center of the accommodation case (90).

4. The power storage device according to claim 2, wherein
the power storage unit (110) includes a power storage module (M1),
the power storage module (M1) has a lower surface with a smoke exhaust unit (852) to exhaust gas present in the power storage module (M1), and
the case smoke exhaust valve (85) is provided below a center of the accommodation case (90) in the upward/downward direction.

5. The power storage device according to claim 1, the power storage device (100) being mounted in a vehicle (150),
the power storage device (100) further comprising a sensor (70) that senses water, wherein
the recess (50) extends in a longitudinal direction of the vehicle (150), and
the sensor (70) is provided at one end portion of the recess (50) in the longitudinal direction of the vehicle (150).

6. The power storage device according to claim 5, wherein
the vehicle (150) comprises an electrical device (121) connected to the sensor (70),
the electrical device (121) is disposed above the power storage device (100) on a side of the vehicle (150) rearward of a center of the power storage device (100) in the longitudinal direction of the vehicle (150), and
the one end portion is a rear end portion of the recess (50) in the longitudinal direction of the vehicle (150).

7. The power storage device according to claim 1, the power storage device (100) being mounted in a vehicle (150),
the peripheral wall (922) including a first side wall (931) and a second side wall (932) spaced in a lateral direction of the vehicle (150),
the power storage unit (110) including
a first power storage module (M1), and
a second power storage module (M2) spaced from the first power storage module (M1) in the lateral direction of the vehicle (150),
the at least one terminal unit (619-624) including
a first terminal unit (619) provided at the first power storage module (M1), and
a second terminal unit (621) provided at the second power storage module (M2),
the power storage device (100) further comprising:
a first reinforcement member (821) provided at the lower case (92) and projecting upward from the bottom wall (921); and
a second reinforcement member (822) provided at the lower case (92), projecting upward from the bottom wall (921), and spaced from the first reinforcement member (821) in the lateral direction of the vehicle (150), wherein
the first reinforcement member (821) and the second reinforcement member (822) extend in a longitudinal direction of the vehicle (150),
the first side wall (931), the first power storage module (M1), the first reinforcement member (821), the second power storage module (M2), the second reinforcement member (822), and the second side wall (932) are disposed in this order in the lateral direction of the vehicle (150),
the recess (50) includes
a first groove (51) below the first terminal unit (619), and
a second groove (53) below the second terminal unit (621),
the first groove (51) extends in the longitudinal direction of the vehicle (150) and includes a first bottom surface (51a) extending in the longitudinal direction of the vehicle (150),
the second groove (53) extends in the longitudinal direction of the vehicle (150) and includes a second bottom surface (53a) extending in the longitudinal direction of the vehicle (150),
a distance (r1) between the first power storage module (M1) and the first side wall (931) is smaller than a distance (d1) between the first terminal unit (619) and the first bottom surface (51a),
a distance (r2) between the first power storage module (M1) and the first reinforcement member (821) is smaller than the distance (d1) between the first terminal unit (619) and the first bottom surface (51a),
a distance (r3) between the second power storage module (M2) and the first reinforcement member (821) is smaller than a distance (d3) between the second terminal unit (621) and the second bottom surface (53a), and
a distance (r4) between the second power storage module (M2) and the second reinforcement member (822) is smaller than the distance (d3) between the second terminal unit (621) and the second bottom surface (53a).

8. The power storage device according to claim 1, the power storage device (100) being mounted in a vehicle (150), wherein
the recess (50) extends in a longitudinal direction of the vehicle (150),
the recess (50) includes a first region (531) having a first depth and a second region (532) having a second depth larger than the first depth, and
the second region (532) is located on a side of the vehicle (150) rearward of the first region (531).
